# EUROPEAN PATENT SPECIFICATION

(11) **EP 0 826 747 B1**
(45) Date of publication and mention of the grant of the patent: **18.10.2000**
(21) Application number: 97114373.0
(22) Date of filing: 20.08.1997
(51) Int. Cl.: C09D 5/08, C09D 163/00, C08G 59/14

(54) **Aqueous anti-rust agent, anti-rust method, and anti-rust treated metal material**
Wässrige Antirostadditive, Verfahren zur Rostschutzbehandlung und rostschutzbehandelte Metalloberfläche
Additifs antirouilles aqueux, méthode de traitement antirouille et surface ayant subi un traitement antirouille

(30) Priority: 22.08.1996 JP 22102596
(43) Date of publication of application: 04.03.1998
(73) Proprietor: Nippon Paint Co., Ltd., Osaka-shi, Osaka (JP)
(72) Inventor: Shimakura, Toshiaki, Ichikawa-shi, Chiba 272 (JP); Onodera, Yousuke, Kawasaki-shi, Kanagawa 211 (JP); Yasuhara, Kiyotada, Kashiwa-shi, Chiba 277 (JP)
(74) Representative: Hansen, Bernd, Dr. Dipl.-Chem.

(56) References cited:
- EP-A- 0 071 429
- EP-A- 0 080 165
- EP-A- 0 249 183
- EP-A- 0 508 120
- EP-A- 0 684 294
- EP-A- 0 694 593
- US-A- 3 991 028
- US-A- 4 457 790

## Description

### BACKGROUND OF THE INVENTION:

### Field of the Invention:

This invention relates to a non-chrome aqueous anti-rust agent, anti-rust treatment method, and anti-rust treated metal material, and in particular to an anti-rust agent, anti-rust method, and anti-rust treated metal material which are kind to the environment.

### Background of the Invention:

In general, when metals are painted, the metal surface is coated with an anti-rust agent so as to form a coating which protects against corrosion.

In particular, in atmospheres having a high salt content, such as coastal areas or in high humidity atmospheres, white rust tends to form on the surface of zinc-plated steel and zinc alloy plated steel causing its appearance to seriously deteriorate and decreasing the corrosion resistance of the underlying iron surface.

The usual method to prevent the formation of white rust is chromate treatment with a coating type chrome anti-rust agent containing hexavalent chromium. In this regard, Japanese Patent Laid-Open Publication No. Hei 3-131370 discloses a surface treatment wherein an aqueous composition comprising more than 60 weight parts solid content but not more than 120 weight parts solid content of an aqueous dispersion of silica, and from 1 to 4 weight parts solid content of an aqueous dispersion of a chromium compound, expressed relative to a copolymer resin dispersion of an alpha-olefin with an alpha, beta-ethylene unsaturated carboxylic acid, is applied to a zinc-plated steel surface, and the coated surface is then dried by heating.

However, this aqueous dispersion of a chromium compound contains hexavalent chromium which, owing to its toxicity, is an environmental hazard. Also, coating type chrome anti-rust agents containing an aqueous dispersion of chromium compounds are associated with pollution, have adverse effects on human beings, and are difficult to dispose.

Various methods have been proposed to address these problems by using non-chrome coating type anti-rust agents. For example, in Japanese Laid-Open Publication No. 52-73137, "A Method of Forming a Protective Film on Zinc or Zinc Alloy", the zinc or zinc alloy surface is treated by an aqueous solution or suspensions which contains tannin, tannic acid and silicic acid, a silicic acid sol or an alumina sol, wherein one or more of these compounds are used.

However, although the aqueous solutions and suspensions described in this publication are of the non-chrome type, they did not provide the desired corrosion resistance when they were used to treat zinc or zinc alloy surfaces.

Further, in Japanese Laid-Open Publication No. Hei 1-172406, "Metal Treatment and Post-Treatment By Amino-Oxide Containing Polyvalent Phenol Compounds", an amino-oxide containing polyvalent phenol compound is disclosed which can form a hydroxyamine by condensing a polymer 1 having at least one unit represented by the following structural formula (I) with a polymer 2 which is a condensation polymer, reacting the condensed prepolymer resin product obtained with an aldehyde, ketone or secondary amine so as to give a final addition product, reacting this final addition product with hydrogen peroxide, and neutralizing with acid. It is reported that corrosion resistance and coating adhesion properties improve when aluminium, steel and zinc surfaces are treated using this compound: 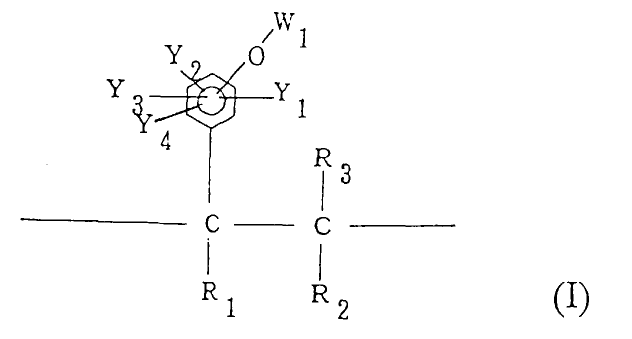 (where R₁-R₃ are independently selected for each of the aforesaid units from a group comprising hydrogen, alkyl groups comprising from 1 to approximately 5 carbon atoms and aryl groups comprising from 6 to approximately 18 carbon atoms,
Y₁-Y₄ are independently selected for each of the aforesaid units from a group comprising hydrogen, alkyl or aryl groups comprising -CR₁₁R₅OR₆, -CH₂Cl or from 1 to approximately 18 carbon atoms, or groups comprising Z where Z is represented by: 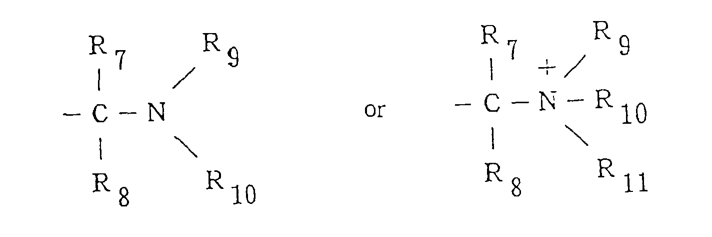 R₅-R₁₁ are selected from a group comprising hydrogen, alkyl or aryl; and W1 is selected from a group comprising hydrogen, acyl fragments, acetyl, benzoyl, 3-allyloxy-2-hydroxypropyl-, ethylene oxide or mixtures, or copolymers of same).

However, the amino-oxide containing polyvalent phenol compound disclosed in the aforesaid Japanese Laid-Open Publication No. 1-172406 was developed mainly for the post-treatment of zinc surfaces, and it is inadequate as a pre-treatment agent for preventing rust prior to the coating of zinc or zinc alloys.

### SUMMARY OF THE INVENTION:

It is therefore an object of this invention, which was conceived in view of the above problems, to provide a coating type non-chrome anti-rust agent having an equivalent or superior performance to that of chrome anti-rust agents, and which in particular is suitable for the treatment of zinc-plated steel and unplated steel.

To achieve the aforesaid objective, a non-chrome aqueous anti-rust agent according to this invention comprises a modified epoxy resin or derivative thereof representing a copolymer comprising at least the structural unit derived from a component of the following formula (1): 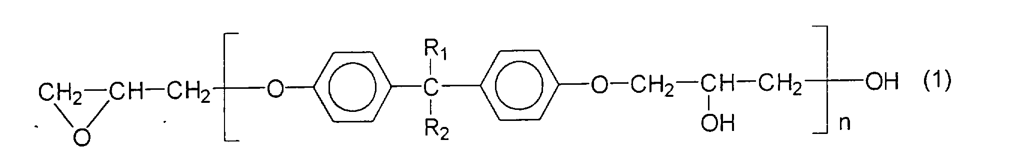 (where R₁, R₂ are substitutable alkyl groups comprising methyl, ethyl, propyl, butyl, t-butyl, and pentyl from 1 to 5 carbon atoms, or substitutable alkenol groups comprising methanol, ethanol, propanol, isopropanol, butanol, and pentanol from 1 to 5 carbon atoms), and the structural unit derived from the general formula (2): 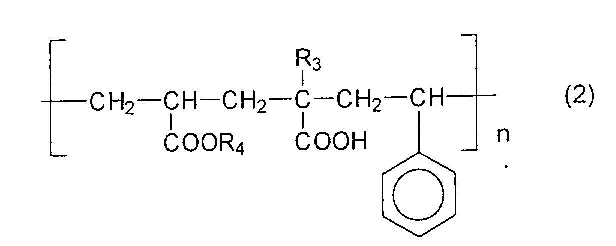 (where R3 and R4 are substitutable alkyl groups comprising methyl, ethyl, propyl, butyl, t-butyl, and pentyl from 1 to 5 carbon atoms, or substitutable alkanol groups comprising methanol, ethanol, propanol, isopropanol, butanol and pentanol from 1 to 5 carbon atoms) and having a number average molecular weight of 3.000 to 20.000; and further comprising ammonium phosphate in an amount of 100 to 5.000 ppm relative to the aqueous anti-rust agent.

Preferably, the modified epoxy resin is a copolymer of formulae (1) and (2), having a number average molecular weight of approximately 10.000.

In the aqueous anti-rust agent according to this invention, the aforesaid modified epoxy resin or derivative, is further modified by the amine represented by the following formulae (3) or (4): 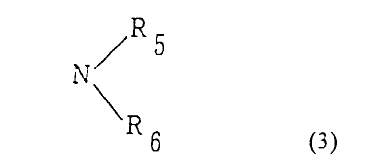 (where R₅, R₆ are substitutable alkyl groups comprising methyl, ethyl, propyl, n-butyl, t-butyl, pentyl, hexyl, heptyl, octyl, nonyl, and decanyl from 1 to 10 carbon atoms, or substitutable alkanol groups comprising methanol, ethanol, propanol, isopropanol, butanol, pentanol, hexanol, heptanol, octanol, nonanol, and decanol from 1 to 10 carbon atoms wherein the alkanol groups can comprise plural hydroxyl groups). 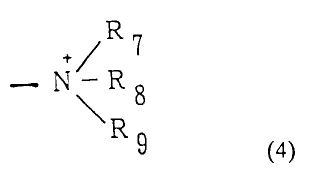 (where R₇, R₈, R₉ are substitutable alkyl groups comprising methyl, ethyl, propyl, n-butyl, t-butyl, pentyl, hexyl, heptyl, octyl, nonyl, and decanyl from 1 to 10 carbon atoms, or substitutable alkenol groups comprising methanol, ethanol, propanol, isopropanol, butanol, pentanol, hexanol, heptanol, octanol, nonanol, and decanol from 1 to 10 carbon atoms).

In general, in order for the aforesaid anti-rust agent to be effective, it must:
(A) Block corrosive fluids,
(B) Form anti-rust film adhering to metal base,
(C) Cause metal passivation due to anti-rust ions, and
(D) Form anti-rust film resistant to water, acid and alkali.
If any of these characteristics are lacking, full anti-rust properties will not be obtained.

Modified epoxy resins and their derivatives, or phenolic resins, comprise a hydroxyl group attached to a benzene ring, and, as this hydroxyl group is adsorbed by the base metal, anti-rust coatings adhere very well to the base metal. Phenolic resins also generally have excellent resistance to water and chemical reagents (alkali resistance, acid resistance) so that a film having good anti-rust properties is obtained.

However, in some cases, an adequate anti-rust film is not obtained with phenolic resins alone, and particularly weatherability declines. A good anti-rust film may nevertheless be obtained by blending the phenolic resin with another resin in order to compensate for this defect.

In the anti-rust treatment method according to this invention, any of the above aqueous anti-rust agents is coated on a metal surface, and the metal surface is then heated and dried to a plate temperature of 50-250°C. Alternatively, the metal surface is first heated to a plate temperature of 50-250°C, any of the aqueous anti-rust agents defined in Claims 1 to 3 is coated, and the metal surface is then dried.

The anti-rust treated metal surface according to this invention is a metal surface treated by any of the above aqueous anti-rust agents.

Therefore, using the anti-rust agent, anti-rust method, or anti-rust treated metal surface according to this invention, superior anti-rust properties to those of chrome-based anti-rust agents can be obtained without the use of toxic chromium. The aqueous anti-rust agent according to this invention may be coated on zinc-plated steel or unplanted steel and then dried, or alternatively the steel may be coated while still hot as the agent is rapid-drying.

### Anti-Rust Agent

The anti-rust agent according to this invention is a modified epoxy resin having at least the structural units shown by the following formulae (1) and (2), or a derivative of same: 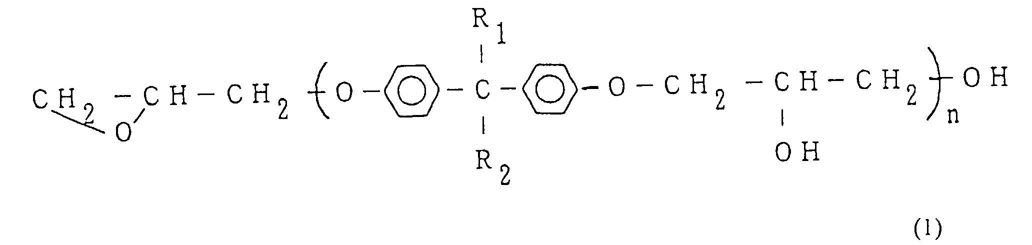 (where R₁, R₂ are substitutable alkyl groups comprising methyl, ethyl, propyl, butyl, t-butyl, and pentyl from 1 to 5 carbon atoms, or substitutable alkanol groups comprising from methanol, ethanol, propanol, isopropanol, butanol, and pentanol 1 to 5 carbon atoms). 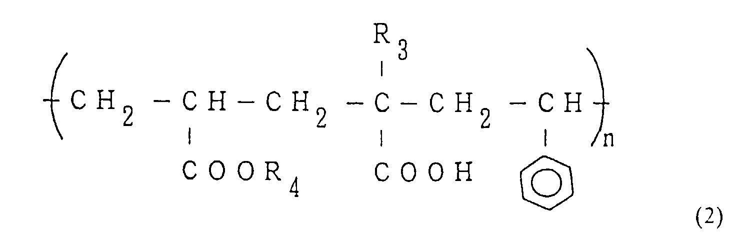 (where R₃, R₄ are substitutable alkyl groups comprising from methyl, ethyl, propyl, butyl, t-butyl, and pentyl 1 to 5 carbon atoms, or substitutable alkanol groups comprising from methanol, ethanol, propanol, isopropanol, butanol, and pentanol 1 to 5 carbon atoms).

The above modified epoxy resin is a copolymer of the above structural units (1) arid (2). Its number average molecular weight is approximately in the range 3,000-20,000, but preferably 5,000-15,000. "Polysol 8500" (Showa Polymers K.K.) may for example be used as the modified epoxy resin.

It is preferred that the bisphenol A epoxy resin represented by the above formula (1) has the following structural formula (5), and the acrylic resin represented by the above formula (2) has the following structural formula (6): 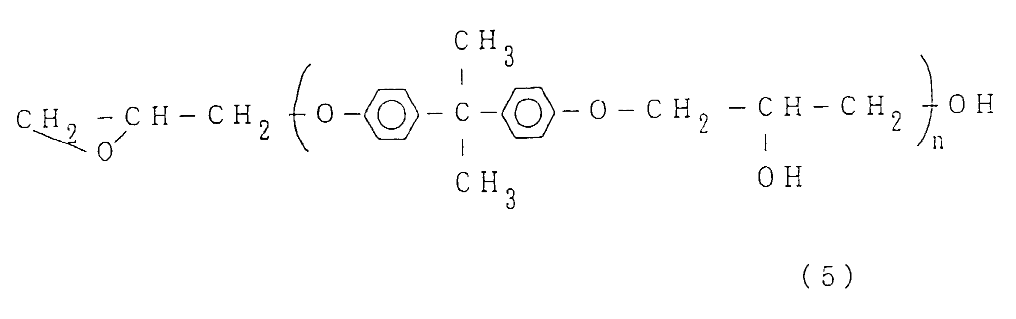 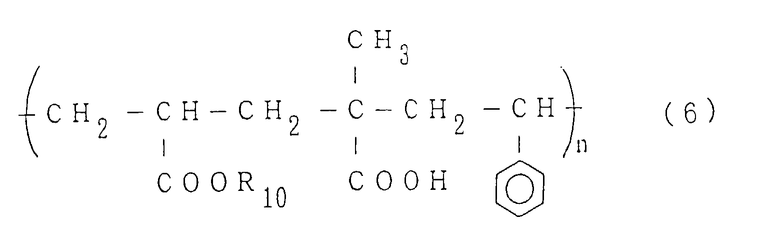 (where R₁₀ is a substitutable alkyl group comprising methyl, ethyl, propyl, butyl, t-butyl, and pentyl from 1 to 5 carbon atoms, or a substitutable alkanol group comprising from methanol, ethanol, propanol, isopropanol, butanol, and pentanol 1 to 5 carbon atoms).

The aqueous anti-rust agent according to this invention comprises at least one type of phenolic resin, and at least one other type of resin selected from polyester resin, polycarbonate resin, acrylic resin, epoxy resin, polyolefin resin and polyurethane resin, the solid content weight ratio when the above phenolic resin is mixed with the other resin lying in the range 4:1 to 1:4.

The aforesaid phenolic resin may be at least one type of aqueous resin such as polyvinyl phenol resin, bisphenol A resin, Novolak® type phenol resin or Rezol® type phenol resin. Formula (7) shows the polyvinyl phenol resin skeleton, formula (8) shows the bisphenol A resin skeleton and the formula (9) shows the Novolak® type resin skeleton: 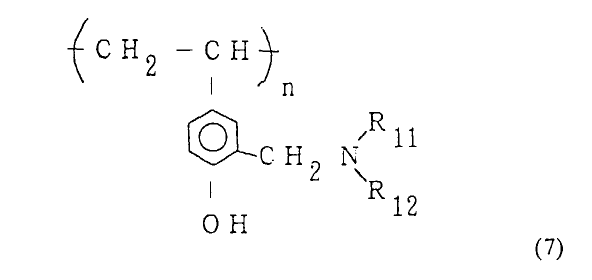 (where R₁₁, R₁₂ are substitutable alkyl groups comprising methyl, ethyl, propyl, butyl, t-butyl, and pentyl from 1 to 5 carbon atoms, or substitutable alkanol groups comprising from methanol, ethanol, propanol, isopropanol, butanol, and pentanol 1 to 5 carbon atoms). 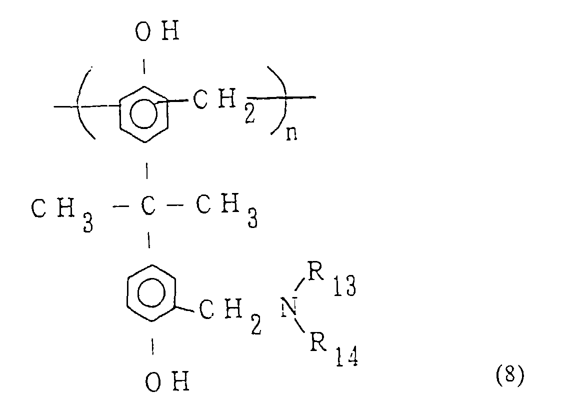 (where R₁₃, R₁₄ are substitutable alkyl groups comprising methyl, ethyl, propyl, butyl, t-butyl, and pentyl from 1 to 5 carbon atoms, or substitutable alkanol groups comprising from methanol, ethanol, propanol, isopropanol, butanol, and pentanol 1 to 5 carbon atoms). 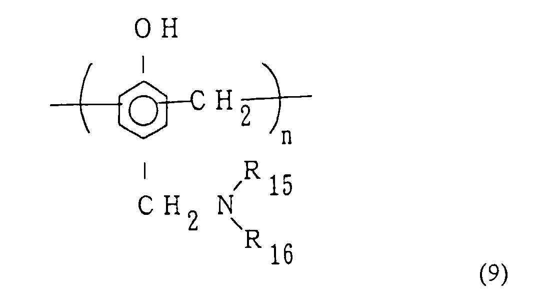 (where R₁₅, R₁₆ are substitutable alkyl groups comprising methyl, ethyl, propyl, butyl, t-butyl, and pentyl from 1 to 5 carbon atoms, or substitutable alkanol groups comprising from methanol, ethanol, propanol, isopropanol, butanol, and pentanol 1 to 5 carbon atoms).

The aforesaid other resins may be blended with this phenolic resin to compensate for its defects. The following properties are obtained according to the type of other resin as shown in the following Table 1. For example, weatherability is improved by blending a polyester resin with the phenolic resin.

**TABLE 1**

| | Resistance to to salt spray | Resistance to humidity | Weatherability | Resistance to chemicals |
|---|---|---|---|---|
| Phenolic resin | ○ | ○ | × | ○ |
| Polyolefin resin | ○ | - | - | - |
| Polyester resin | ○ | - | ○ | - |
| Acrylic resin | - | ○ | - | - |
| Polycarbonate resin | - | ○ | - | - |
| Epoxy resin | - | ○ | - | ○ |
| Polyurethane resin | - | ○ | - | ○ |

When the solid content weight ratio of the aforesaid phenolic resin to the other resin exceeds 4:1 (i.e. when the blending proportion of phenolic resin is high), weatherability declines. On the other hand, when the solid content weight ratio of the aforesaid phenolic resin to the other resin is less than 1:4 (i.e. when the blending proportion of the other resin is high), resistance to brine decreases.

Other aqueous anti-rust agents according to this invention may be obtained by modifying the aforesaid modified epoxy resin or derivative, or the aforesaid phenolic resin, with an amine having the following formulae (3) or (4): 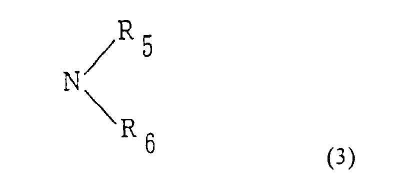 (where R₅, R₆, are substitutable alkyl groups comprising methyl, ethyl, propyl, n-butyl, t-butyl, pentyl, hexyl, heptyl, octyl, nonyl, and decanyl from 1 to 10 carbon atoms, or substitutable alkanol groups comprising methanol, ethanol, propanol, isopropanol, butanol, pentanol, hexanol, heptanol, octanol, nonanol, and decanol from 1 to 10 carbon atoms wherein the alknol groups can comprise plural hydroxyl groups). 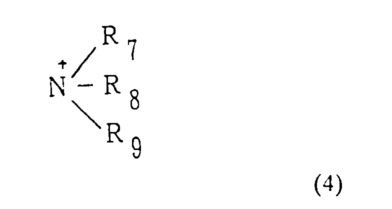 (where R₇, R₈, R₉ are substitutable alkyl groups comprising methyl, ethyl, propyl, n-butyl, t-butyl, pentyl, hexyl, heptyl, octyl, nonyl, and decanyl from 1 to 10 carbon atoms, or substitutable alkanol groups comprising from methanol, ethanol, propanol, isopropanol, butanol, pentanol, hexanol, heptanol, octanol, nonanol, and decanol 1 to 10 carbon atoms wherein the alknol groups can comprise plural hydroxyl groups).

For this purpose, the aforesaid phenolic resin may be reacted with formaldehyde in the presence of an organic acid or inorganic acid so as to obtain a phenol condensation compound. This phenol condensation compound is then amine-modified by reacting it with the amine shown by the above formulae (3) or (4) and the same mole amount of formaldehyde as that of the amine (Mannich reaction).

It is preferred that at least 50% of the resin is converted to the amine derivative in terms of benzene ring amination.

The aqueous anti-rust agent according to this invention also comprises phosphoric acid ions or may comprise water-dispersible silica.

### Phosphoric Acid Ions

Phosphoric acid ions are obtained, from ammonium phosphate. Phosphoric acid ions form a passivation layer of phosphoric acid salt ions on the surface of the metal material to be coated, and promote a crosslinking reaction in the film formed from the above modified epoxy resin or derivative, or phenolic resin.

The phosphoric acid ion content is in the range 100-5000 ppm. When the phosphoric acid ion content is less than 100 ppm of the aqueous anti-rust agent, full anti-rust protection cannot be obtained, but when on the other hand the phosphoric acid ion content exceeds 5000 ppm of the aqueous anti-rust agent, anti-rust properties decline, the resin transforms to a gel and storage stability decreases.

### Water-Dispersed Silica

The aqueous anti-rust agent according to this invention may also contain water-dispersible silica in order to improve drying properties, anti-scratch properties and coating adhesion properties.

There is no particular limitation on the water-dispersed silica provided that it has little sodium or other impurities and is at least slightly alkaline. For example, a commercial silica gel such as "Snowtex N" (Nissan Chemical Industries K.K.) or "Adelite AT-20N" (Asahi Electrochemical Industries K.K.), or commercial aerosil powdered silica particles, may be used.

The water-dispersed silica content is preferably in the range 0.1-50 weight parts per 100 weight parts solid content of the aqueous anti-rust agent according to this invention. When the water-dispersed silica content is less than 0.1 weight parts, full anti-rust protection is not obtained, and when on the other hand the water-dispersed silica content exceeds 30 weight parts, anti-rust properties decline.

The aqueous anti-rust agent according to this invention may further comprise other components such as pigments and surfactants. A silane coupler may also be blended to improve the coating adhesion between the modified epoxy resin or its derivative, phenolic resin or other resin (referred to hereafter as aqueous resin), the zinc or other metal, and the phosphoric acid compound layer.

Examples of inorganic pigments are titanium oxide (TiO₂), zinc oxide (ZnO), zirconium oxide (ZrO), calcium carbonate (CaCO₃), barium sulfate (BaSO₄), alumina (Al₂O₃), kaolin clay, carbon black, iron oxides (Fe₂O₃, Fe₃O₄), or coloring pigments such as organic pigments.

Examples of silane couplers are γ-aminopropyl trimethoxysilane, γ-aminopropyl triethoxysilane, γ-glycidoxypropyl trimethoxysilane, γ-methacryloxypropyl trimethoxysilane, and N-[2-(vinylbenzylamino)ethyl]-3-aminopropyl trimethoxysilane.

A solvent may be added to the aqueous anti-rust agent according to this invention so as to improve the film-forming properties of the aqueous resin, allowing formation of a more uniform, smoother film. There is no particular limitation on this solvent provided that it is generally used for coatings, e.g. an alcohol, ketone, ester, or ether.

### Anti-Rust Treatment Method

The aforesaid anti-rust agent according to this invention may be used to protect zinc-plated steel or unplated steel. In this anti-rust treatment, the anti-rust agent may be applied to a metal material (object to be coated), and after coating, the metal heated and dried in a current of warm air. Alternatively, the metal material may first be heated, the anti-rust agent applied while the metal is hot, and the residual heat used to dry the coated metal.

In either of the above methods, the heating temperature is a plate temperature in a range of 50-250°C. When the temperature is less than 50°C, moisture evaporates slowly and full film-forming properties are not obtained, so anti-rust protection is poor. On the other hand when the temperature exceeds 250°C, the aqueous resin is thermally decomposed, so performance in the salt spray test (SST) and water resistance decline, and the color of the agent turns yellow. Hence the temperature is limited to the above range, and preferably to the range of 70-250°C.

When the metal material is heated in warm air and dried after coating, the drying time is preferably 1 second-5 minutes.

In the above anti-rust treatment, the coating thickness of the anti-rust agent of this invention is preferably at least 0.1 µm of the dried coating thickness. When the thickness is less than 0.1 µm, anti-rust protection is poor. An excessive thickness on the other hand is uneconomical as an undercoat treatment, and it is also inconvenient. The thickness range is therefore preferably 0.1-20 µm, and more preferably 0.1-10 µm.

In this anti-rust treatment, there is no particular limitation on the method used to apply the anti-rust agent of this invention, this being done by any of the methods commonly employed in the art such as roll coating, air spray, airless spray or immersion.

The anti-rust treated metal material according to this invention is a metal material whereon an anti-rust film is formed by the aforesaid anti-rust treatment method. This anti-rust treatment method is the same as that described above, and its details will therefore be omitted.

This metal material may for example be a metal sheet, e.g. zinc-plated sheet, zinc-alloy plated sheet (Zn-Al, Zn-Fe, Zn-Ni), aluminum sheet, aluminum alloy plated sheet (Al-Mg, etc.), stainless steel or cold-rolled steel sheet.

### DESCRIPTION OF THE ACTUAL EXAMPLES:

Next, this invention will be described in detail with reference to specific examples and comparative examples.

### Examples 1-13 and Comparative Examples 1-3

### (1) Metal sheet:

The surface of a 70×150×1.6mm piece of commercial molten zinc-plated steel sheet ("Z-27", Japan Test Panel K.K.) was polished by Scotch Brite®, degreased by an alkali degreaser ("Surf Cleaner 53", Nippon Paint Co., Ltd.), rinsed with water, and dried.

### (2) Method of manufacturing anti-rust agent and anti-rust agent

### Example 1

The modified resin according to this invention was "Polysol 8500" (Showa Polymers K.K). To 100 weight parts solid content of this resin were added 3 weight parts solid content of "Snowtex N" (Nissan Chemical Industries K.K.) as water-dispersed silica and 0.15 weight parts solid content of ammonium phosphate ((NH₄)₂PO₄)) (Wako Pure Chemicals Inc.) to give 0.1 weight parts converted to phosphoric acid ions, and pure water was added so as to give a mixture containing 20 weight % solid content of aqueous anti-rust agent. After stirring for 30 minutes in a disperser, the pH was adjusted to 8.0, and the resulting aqueous anti-rust agent used for Example 1.

The aqueous anti-rust agent thus obtained was preheated to a plate temperature of 80°C (heating prior to coating).

This agent was then applied to the aforesaid molten zinc-plated steel plate using a bar coater (#5) so as to give a dry film of 2-3 µm.

### Examples 2-11

An aqueous anti-rust agent was prepared and anti-rust treatment performed as in Example 1, excepting that the resin combinations and blending proportions were varied as shown in Table 2. Also, after-heating was used (i.e. the aqueous anti-rust agent was applied to the metal material, and the metal material was heated and dried in a current of warm air after the agent was applied). In this method, the application was performed using a bar coater (#5), and the drying was performed at a plate temperature of 150°C for 3 minutes.

### Example 12

An aqueous anti-rust agent was prepared as in Example 2 excepting that the agent solution did not contain phosphoric acid ions. The anti-rust treatment was performed according to the method of Example 2.

### Example 13

An aqueous anti-rust agent was prepared as in Example 2, excepting that 2 weight parts of γ-aminopropyl trimethoxysilane were added as a silane coupler to 100 weight parts solid content of resin. The anti-rust treatment was performed according to the method of Example 2.

### Comparative Example 1

70 weight parts solid content of "Snowtex N" (Nissan Chemical Industries K.K.) as water-dispersed silica and 5 weight parts solid content of strontium chromate were blended with 100 weight parts solid content of a carboxylated polyolefin resin, and pure water was added so as to give a mixture containing 20 weight % solid content of aqueous anti-rust agent. After stirring for 30 minutes in a disperser, the pH was adjusted to 8.0, and the resulting aqueous anti-rust agent used for Comparative Example 1.

The aqueous anti-rust agent thus obtained was preheated to a plate temperature of 80°C (heating prior to coating).

This agent was then applied to the aforesaid molten zinc-plated steel plate using a bar coater (#5) so as to give a dry film of 2-3µm.

### Comparative Examples 2-3

An aqueous anti-rust agent was prepared and anti-rust treatment performed as in Example 1, excepting that the resin combinations and blending proportions were varied as shown in Table 2. Also, after-heating was used. In this method, the application was performed using a bar coater (#5), and the drying was performed at a plate temperature of 150°C for 3 minutes.

### (3) Evaluation method

The aforesaid aqueous anti-rust agent was applied to a metal material, and the resulting dried molten (zinc) plated steel sheet evaluated with regard to each of the following items. The test results are shown in Table 2.

### (i) SST (Salt Spray Test)

5% brine was sprayed on an anti-rust treated (coated) surface, and the extent of white rust appearing after 42 hours was evaluated on a scale of 1 to 10 points. The test criteria were as follows:
- 10 points:: No abnormality
- 9 points:: Very slight white rust produced
- 8 points:: Slight white rust produced
- 7-6 points:: Some white rust produced
- 5 points:: White rust covers half of surface area
- 4-2 points:: Extensive white rust produced
- 1 point:: White rust covers entire surface

### (ii) Humidity Test

The extent of white rust appearing was evaluated on a scale of 1 to 10 points after 10 days immersion in a thermostat at 50°C and 95% or higher humidity.
- 10 points:: No abnormality
- 9 points:: Very slight peeling of coating
- 8 points:: Slight peeling of coating
- 7-6 points:: Some peeling of coating
- 5 points:: Peeling of coating over half of surface area
- 4-2 points:: Extensive peeling of coating between 5 points and 1 point
- 1 point:: Peeling of coating over entire surface

### (iii) Outside exposure test

To examine the weatherability of the resin film, the extent of whitening was evaluated on a scale of 1 to 10 points after 6 months exposure on the roof of the Tokyo Office of Nippon Paint Co., Ltd.. The test results were as follows :
- 10 points:: No abnormality
- 9 points:: Very slight whitening between 10 points and 8 points
- 8 points:: Slight whitening
- 7-6 points:: Some whitening
- 5 points:: Whitening of half of surface area
- 4-2 points:: Extensive whitening
- 1 point:: Whitening of entire surface

**TABLE 2:**

| | | Aqueous anti-rust agent composition | | Drying method (plate temperature °C) | Test method | | |
|---|---|---|---|---|---|---|---|
| | | Resin type and composition | Resin blending ratio (solid content weight ratio) | | SST | Humidity test | Weatherability (extent of whitening) |
| | 1 | Modified epoxy resin alone | - | Pre-heating (80°C) | 10 | 8 | 8 |
| | 2 | Modified epoxy resin/ Polyester resin | 1/1 | Pre-heating (80°C) | 10 | 9 | 10 |
| | 3 | Folyvinylphenol resin/Polyester resin | 1/1 | After-heating (150°C) | 10 | 10 | 10 |
| | 4 | Polyvinylphenol resin/Polycarbonate resin | 1/1 | After-heating (150°C) | 10 | 10 | 9 |
| | 5 | Bisphenol A phenol resin/Polyurethane resin | 1/1 | After-heating (150°C) | 10 | 10 | 9 |
| | 6 | Novolak® type phenol resin/Polyolefin resin | 1/1 | After-heating (150°C) | 10 | 9 | 9 |
| | 7 | Phenol resin/ Polester resin | 1/1 | After-heating (150°C) | 10 | 10 | 10 |
| | 8 | Polyvinylphenol resin/Epoxy resin | 1/1 | After-heating (150°C) | 10 | 10 | 10 |
| | 9 | Polyvinylphenol resin/Polyester resin | 1/4 | After-heating (150°C) | 9 | 9 | 10 |
| | 10 | Polyvinylphenol resin/Polyester resin | 4/1 | after-heating (150°C) | 9 | 9 | 8 |
| | 11 | Modified epoxy resin/ Acrylic resin | 1/1 | Pre-heating (80°C) | 10 | 10 | 9 |
| | 12 | Modified epoxy resin/ Polyester resin (no phosphoric acid ions) | 1/1 | Pre-heating (80°C) | 9 | 8 | 9 |
| | 13 | Modified epoxy resin/ Polyester resin (comprising silane couple) | 1/1 | Pre-heating (80°C) | 10 | 9 | 10 |
| | 1 | Chronate-containg resin type anti-rust agent | - | Pre-heating (80°C) | 5 | 5 | 6 |
| | 2 | Polyvinylphenol resin /Polyester resin | 1/5 | After-heating (150°C) | 6 | 5 | 5 |
| | 3 | Polyvinylphenol resin /Polyester resin | 5/1 | After-heating (150°C) | 5 | 5 | 4 |
| Note: Modified epoxy resin: "Polysol 8500" (Showa Polymers K.K.) Phenol resin: "PL-4874" (Gun-Ei Chemical Industries K.K.) Polyvinylphenol resin: Resin having a structure shown by the above formula (7) Bisphenol A phenol resin: Resin having a structure shown by the above formula (8) Novolak ®type phenol resin: Resin having a structure shown by the above formula (9) Polyolefin resin "Hi-Tech S-7024" (Toho Chemical Industries K.K.) Polyester resin: "Pesregin A-124G" (Takamatsu Oils and Fats K.K.) Acrylic resin: "EM1220" (Nippon Paint Co., Ltd.) Polycarbonate resin: "F-8127D" (Dai-Ichi Industrial Pharmaceuticals K.K.) Epoxy resin: "Epoljon EA-55" (Kanebo-NSC K.K.) Polyurethane resin: "Bontaiter-HUX-320" (Asahi Electrochemical Industries) | | | | | | | |

From these results, it was found that the non-chrome aqueous anti-rust agent according to this invention has equivalent or superior anti-rust properties to those of a conventional chrome-containing anti-rust agent. It was found that, these anti-rust properties were further improved by addition of phosphoric acid ions, or by blending another aqueous resin with a phenolic resin. Moreover, it was found that, according to the anti-rust treatment method of this invention, equivalent or superior anti-rust properties to those of a conventional anti-rust treatment with a chrome-containing anti-rust agent were obtained.

Hence, the aqueous anti-rust agent and anti-rust treatment agent according to this invention offer a performance equivalent or superior to that of a chrome type anti-rust agent, and in particular have remarkable anti-rust properties in the treatment of zinc-plated steel sheet and unplated steel sheet.

Finally, the anti-rust treated metal material according to this invention offers an anti-rust protection equivalent or superior to that of a conventional chromate-treated metal material.

## Claims

1. A non-chrome aqueous anti-rust agent characterized in comprising a modified epoxy resin or derivative thereof representing a copolymer comprising at least the structural unit derived from a component of the following formula (1): 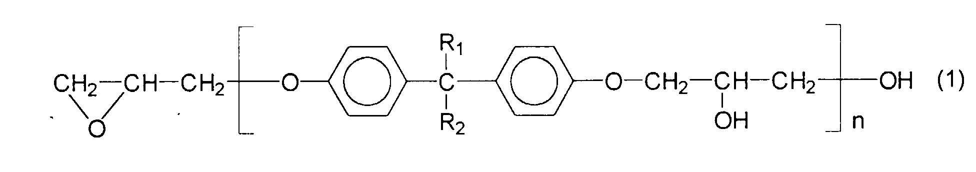 (where R₁, R₂ are substitutable alkyl groups comprising methyl, ethyl, propyl, butyl, t-butyl, and pentyl from 1 to 5 carbon atoms, or substitutable alkenol groups comprising methanol, ethanol, propanol, isopropanol, butanol, and pentanol from 1 to 5 carbon atoms), and the structural unit derived from the general formula (2): 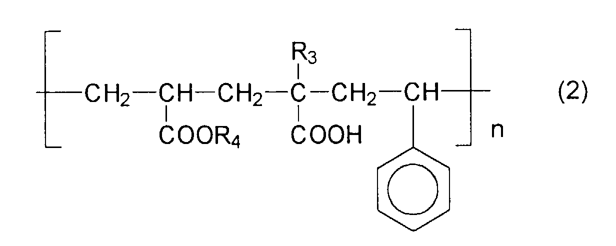 (where R3 and R4 are substitutable alkyl groups comprising methyl, ethyl, propyl, butyl, t-butyl, and pentyl from 1 to 5 carbon atoms, or substitutable alkanol groups comprising methanol, ethanol, propanol, isopropanol, butanol and pentanol from 1 to 5 carbon atoms) and having a number average molecular weight of 3.000 to 20.000; and further comprising ammonium phosphate in an amount of 100 to 5.000 ppm relative to the aqueous anti-rust agent.

2. An aqueous anti-rust agent according to Claim 1, wherein the modified epoxy resin is further modified by an amine represented by the following formula (3) or (4): 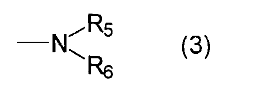 (where R₅, R₆ are substitutable alkyl groups comprising methyl, ethyl, propyl, n-butyl, t-butyl, pentyl, hexyl, heptyl, octyl, nonyl, and decanyl from 1 to 10 carbon atoms, or substitutable alkanol groups comprising methanol, ethanol, propanol, isopropanol, butanol, pentanol, hexanol, heptanol, octanol, nonanol, and decanol from 1 to 10 carbon atoms wherein the alkanol groups can comprise plural hydroxyl groups) 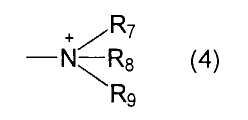 (where R₇, R₈, R₉ are substitutable alkyl groups comprising methyl, ethyl, propyl, n-butyl, t-butyl, pentyl, hexyl, heptyl, octyl, nonyl, and decanyl from 1 to 10 carbon atoms, or substitutable alkanol groups comprising methanol, ethanol, propanol, isopropanol, butanol, pentanol, hexanol, heptanol, octanol, nonanol, and decanol from 1 to 10 carbon atoms).

3. An aqueous anti-rust agent as defined in Claim 1, wherein said modified epoxy resin contained in said anti-rust agent is a copolymer of said formula (1) and (2), and has a number average molecular weight of approximately 10,000.

4. An aqueous anti-rust agent as defined in Claim 1, wherein said modified epoxy resin contained in said anti-rust agent comprises a structural unit derived from a bisphenol A type epoxy resin structural component having the structure represented by the following formula (5), and comprises an acrylic resin structural unit derived from the structure represented by the following formula (6): 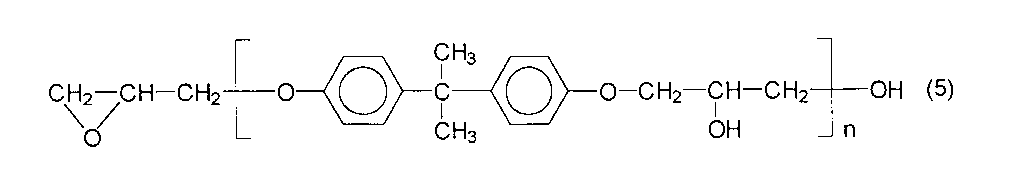 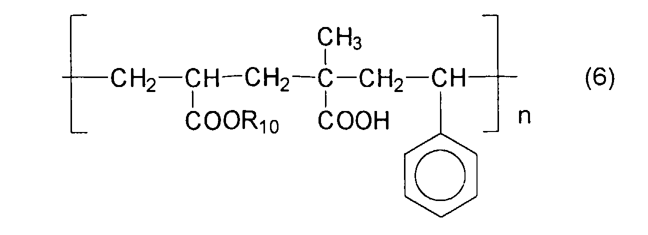 (where R₁₀ is a substitutable alkyl group comprising methyl, ethyl, propyl, butyl, t-butyl, and pentyl from 1 to 5 carbon atoms, or a substitutable alkanol group comprising from methanol, ethanol, propanol, isopropanol, butanol, and pentanol 1 to 5 carbon atoms).

5. An aqueous anti-rust agent as defined in Claims 1-4, further comprising water-dispersible silica.

6. An aqueous anti-rust agent as defined in Claim 5, wherein said water-dispersible silica content is in the range 0.1-50 weight parts relative to 100 weight parts solid content of aqueous anti-rust agent.

7. An aqueous anti-rust agent as defined in any of Claims 1-4, further comprising a pigment or silane coupling agent.

8. An aqueous anti-rust agent as defined in Claim 7 wherein said pigment is at least one type selected from inorganic pigments comprising titanium oxide (TiO₂), zinc oxide (ZnO), zirconium oxide (ZrO), clacium carbonate (CaCO₃), barium sulfate (BaSO₄), alumina (Al₂O₃), kaolin clay, carbon black and iron oxides (Fe₂O₃, Fe₃O₄), or organic pigments.

9. An aqueous anti-rust agent as defined in Claim 7, wherein said silane coupling agent is at least one type selected from γ-aminopropyl trimethoxysilane, γ-aminopropyl triethoxysilane, γ-glycidoxypropyl trimethoxysilane, γ-methacryloxypropyl trimethoxysilane, and N-[2-(vinylbenzylamino)ethyl]-3-aminopropyl trimethoxysilane.

10. An aqueous anti-rust agent as defined in any of Claims 1-4, further comprising a solvent.

11. An aqueous anti-rust agent as defined in Claim 10, wherein said solvent is at least one type selected from alcohols, ketones, esters and ethers.

12. An anti-rust treatment method characterized in that an aqueous anti-rust agent as defined in any of Claims 1 to 2 is coated to a metal surface, and said metal surface is then heated and dried so that its plate temperature reaches 50-250°C.

13. An anti-rust treatment method characterized in that a metal surface is heated so that its plate temperature reaches 50-250°C an aqueous anti-rust agent as defined in any of Claims 1 to 2 is coated to said metal surface, and said metal surface is then dried.

14. An anti-rust treated metal surface characterized in that said surface is treated by an aqueous anti-rust agent as defined in any of Claims 1 to 2.

## Patentansprüche

1. Chromfreies wäßriges Rostschutzmittel,
dadurch gekennzeichnet, daß
es ein modifiziertes Epoxidharz oder Derivat davon umfaßt, das ein Copolymer darstellt, umfassend wenigstens die Struktureinheit, die sich von einer Komponente der folgenden Formel (1) ableitet: 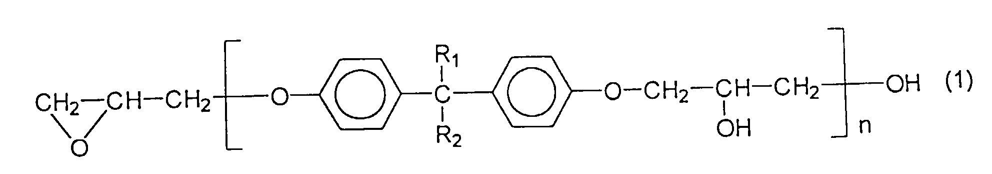 (worin R₁, R₂ substituierbare Alkyl-Gruppen sind, umfassend Methyl, Ethyl, Propyl, Butyl, t-Butyl und Pentyl mit 1 bis 5 Kohlenstoffatomen, oder substituierbare Alkenol-Gruppen, umfassend Methanol, Ethanol, Propanol, Isopropanol, Butanol und Pentanol mit 1 bis 5 Kohlenstoffatomen)
und die Struktureinheit, die sich aus der allgemeinen Formel (2) ableitet: 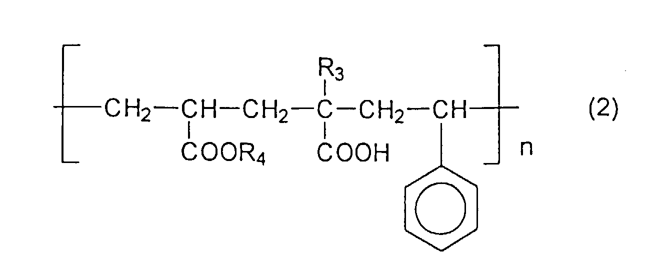 (worin R₃ und R₄ substituierbare Alkyl-Gruppen sind, umfassend Methyl, Ethyl, Propyl, Butyl, t-Butyl und Pentyl mit 1 bis 5 Kohlenstoffatomen, oder substituierbare Alkanol-Gruppen, umfassend Methanol, Ethanol, Propanol, Isopropanol, Butanol und Pentanol mit 1 bis 5 Kohlenstoffatomen)
und mit einem Molekulargewichts-Zahlenmittel von 3 000 bis 20 000; und ferner umfassend Ammoniumphosphat in einer Menge von 100 bis 5 000 ppm relativ zu dem wäßrigen Rostschutzmittel.

2. Wäßriges Rostschutzmittel gemäß Anspruch 1, worin das modifizierte Epoxidharz weiterhin mit einem Amin, dargestellt durch folgende Formeln (3) oder (4), modifiziert ist: 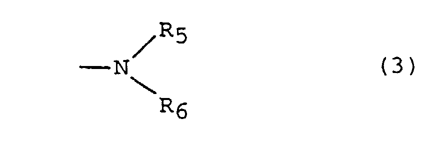 (worin R₅, R₆ substituierbare Alkyl-Gruppen sind, umfassend Methyl, Ethyl, Propyl, n-Butyl, t-Butyl, Pentyl, Hexyl, Heptyl, Octyl, Nonyl und Decanyl mit 1 bis 10 Kohlenstoffatomen, oder substituierbare Alkanol-Gruppen, umfassend Methanol, Ethanol, Propanol, Isopropanol, Butanol, Pentanol, Hexanol, Heptanol, Octanol, Nonanol und Decanol mit 1 bis 10 Kohlenstoffatomen, worin die Alkanol-Gruppen mehrere Hydroxyl-Gruppen umfassen können); 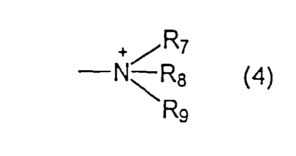 (worin R₇, R₈, R₉ substituierbare Alkyl-Gruppen sind, umfassend Methyl, Ethyl, Propyl, n-Butyl, t-Butyl, Pentyl, Hexyl, Heptyl, Octyl, Nonyl und Decanyl mit 1 bis 10 Kohlenstoffatomen, oder substituierbare Alkanol-Gruppen, umfassend Methanol, Ethanol, Propanol, Isopropanol, Butanol, Pentanol, Hexanol, Heptanol, Octanol, Nonanol und Decanol mit 1 bis 10 Kohlenstoffatomen).

3. Wäßriges Rostschutzmittel wie in Anspruch 1 definiert, worin das modifizierte Epoxidharz, das in dem Rostschutzmittel enthalten ist, ein Copolymer der Formel (1) und (2) ist und ein Molekulargewichts-Zahlenmittel von ungefähr 10 000 aufweist.

4. Wäßriges Rostschutzmittel wie in Anspruch 1 definiert, worin das modifizierte Epoxidharz, das in dem Rostschutzmittel enthalten ist, eine Struktureinheit umfaßt, die von einer Bisphenol A-Typ Epoxidharz-Strukturkomponente abgeleitet ist, mit einer Struktur, die in folgender Formel (5) dargestellt ist, und eine Acrylharz-Struktureinheit umfaßt, die sich von der Struktur, die in der folgenden Formel (6) dargestellt ist, ableitet: 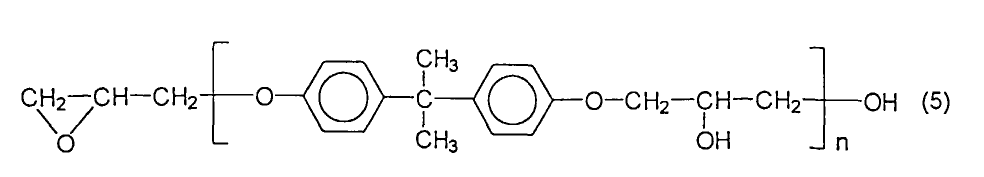 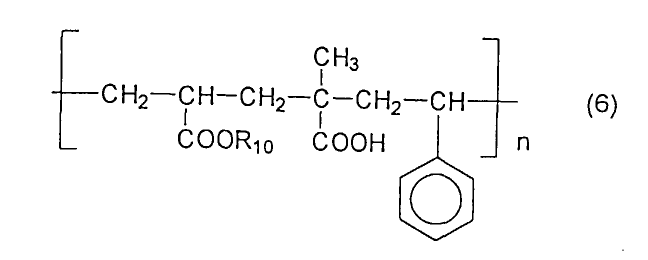 (worin R₁₀ eine substituierbare Alkyl-Gruppe ist, umfassend Methyl, Ethyl, Propyl, Butyl, t-Butyl und Pentyl von 1 bis 5 Kohlenstoffatomen, oder eine substituierbare Alkanol-Gruppe, umfassend Methanol, Ethanol, Propanol, Isopropanol, Butanol und Pentanol mit 1 bis 5 Kohlenstoffatomen).

5. Wäßriges Rostschutzmittel wie in den Ansprüchen 1 bis 4 definiert, weiterhin umfassend in Wasser dispergiertes Siliciumdioxid.

6. Wäßriges Rostschutzmittel wie in Anspruch 5 definiert, worin der Gehalt an in Wasser dispergiertem Siliciumdioxid im Bereich von 0,1 bis 50 Gew.-Teilen ist, relativ zu 100 Gew.-Teilen Feststoffgehalt des wäßrigen Rostschutzmittels.

7. Wäßriges Rostschutzmittel wie in irgendeinem der Ansprüche 1 bis 4 definiert, weiterhin umfassend ein Pigment oder Silan-Kupplungsmittel.

8. Wäßriges Rostschutzmittel wie in Anspruch 7 definiert, worin das Pigment wenigstens ein Vertreter, ausgewählt aus anorganischen Pigmenten, umfassend Titanoxid (TiO₂), Zinkoxid (ZnO), Zirconiumoxid (ZrO), Calciumcarbonat (CaCO₃), Bariumsulfat (BaSO₄), Aluminiumoxid (Al₂O₃), Kaolinton, Ruß und Eisenoxide (Fe₂O₃, Fe₃O₄), oder organischen Pigmenten, ist.

9. Wäßriges Rostschutzmittel wie in Anspruch 7 definiert, worin das Silan-Kupplungsmittel wenigstens ein Vertreter, ausgewählt aus γ-Aminopropyltrimethoxysilan, γ-Aminopropyltriethoxysilan, γ-Glycidoxypropyltrimethoxysilan, γ-Methacryloxypropyltrimethoxysilan und N- [2-(Vinylbenzylamino)ethyl]-3-aminopropyltrimethoxysilan, ist.

10. Wäßriges Rostschutzmittel wie in einem der Ansprüche 1 bis 4 definiert, weiterhin umfassend ein Lösungsmittel.

11. Wäßriges Rostschutzmittel wie in Anspruch 10 definiert, worin das Lösungsmittel wenigstens ein Vertreter, ausgewählt aus Alkoholen, Ketonen, Estern und Ethern, ist.

12. Rostschutzbehandlungsverfahren,
dadurch **gekennzeichnet,** daß
ein wäßriges Rostschutzmittel, wie definiert in einem der Ansprüche 1 bis 2, auf eine Metalloberfläche aufgetragen wird und die Metalloberfläche dann erhitzt und getrocknet wird, so daß seine Plattierungstemperatur 50 bis 250°C erreicht.

13. Rostschutzbehandlungsverfahren,
dadurch **gekennzeichnet,** daß
eine Metalloberfläche erhitzt wird, so daß ihre Plattierungstemperatur 50 bis 250°C erreicht, ein wäßriges Rostschutzmittel, wie in einem der Ansprüche 1 bis 2 definiert, auf die Metalloberfläche aufgetragen und die Metalloberfläche dann getrocknet wird.

14. Rostschutzbehandelte Metalloberfläche,
dadurch **gekennzeichnet,** daß
die Oberfläche mit einem wäßrigen Rostschutzmittel, wie in einem der Ansprüche 1 bis 2 definiert, behandelt ist.

## Revendications

1. Agent antirouille aqueux sans chrome caractérisé en ce qu'il comprend une résine époxyde modifiée ou un dérivé de celle-ci, représentant un copolymère comprenant au moins une unité structurelle dérivée d'un composant de la formule suivante (1) : 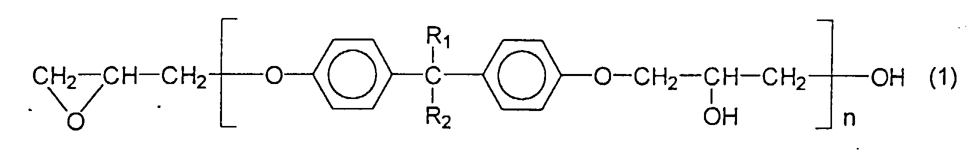 (dans laquelle R₁, R₂ sont des groupes alkyle ayant 1 à 5 atomes de carbone et pouvant être substitués, tels que les groupes méthyle, éthyle, propyle, butyle, t-butyle et pentyle ou des groupes alcanol ayant 1 à 5 atomes de carbone et pouvant être substitués, tels que les groupes méthanol, éthanol, propanol, isopropanol, butanol, et pentanol) et une unité structurelle dérivée de la formule générale (2) : 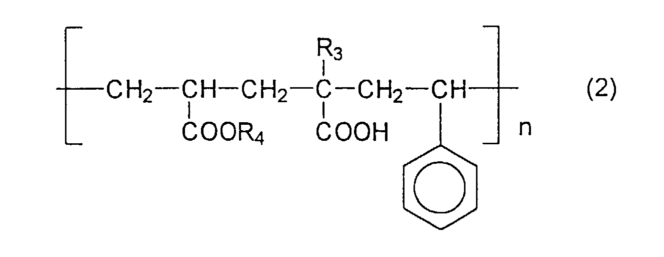 (dans laquelle R₃, R₄ sont des groupes alkyle ayant 1 à 5 atomes de carbone et pouvant être substitués, tels que les groupes méthyle, éthyle, propyle, butyle, t-butyle et pentyle ou des groupes alcanol ayant 1 à 5 atomes de carbone et pouvant être substitués, tels que les groupes méthanol, éthanol, propanol, isopropanol, butanol, et pentanol) et ayant un poids moléculaire moyen en nombre de 3 000 à 20 000 ; et, comprenant, en outre, du phosphate d'ammonium à raison de 100 à 5000 ppm par rapport à l'agent antirouille aqueux.

2. Agent antirouille aqueux selon la revendication 1, dans lequel la résine époxyde modifiée est encore modifiée par une amine représentée par les formules (3) et (4) suivantes : 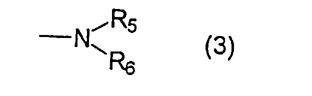 (dans laquelle R₅, R₆ sont des groupes alkyle ayant 1 à 10 atomes de carbone et pouvant être substitués, tels que les groupes méthyle, éthyle, propyle, n-butyle, t-butyle, pentyle, hexyle, heptyle, octyle, nonyle et décyle ou des groupes alcanol ayant 1 à 10 atomes de carbone et pouvant être substitués, tels que les groupes méthanol, éthanol, propanol, isopropanol, butanol, pentanol, hexanol, heptanol, octanol, nonanol et décanol, les groupes alcanol pouvant comporter plusieurs groupes hydroxyle) 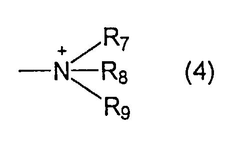 (dans laquelle R₇, R₈, R₉ sont des groupes alkyle ayant 1 à 10 atomes de carbone et pouvant être substitués, tels que les groupes méthyle, éthyle, propyle, n-butyle, t-butyle, pentyle, hexyle, heptyle, octyle, nonyle et décyle ou des groupes alcanol ayant 1 à 10 atomes de carbone et pouvant être substitués, tels que les groupes méthanol, éthanol, propanol, isopropanol, butanol, pentanol, hexanol, heptanol, octanol, nonanol et décanol).

3. Agent antirouille aqueux selon la revendication 1, dans lequel ladite résine époxyde modifiée contenue dans ledit agent antirouille est un copolymère ayant lesdites formules (1) et (2) et ayant un poids moléculaire moyen en nombre d'environ 10 000.

4. Agent antirouille aqueux selon la revendication 1, dans lequel ladite résine époxyde modifiée contenue dans ledit agent antirouille comprend une unité structurelle dérivée d'un composant structurel de résine époxyde de type bisphénol A ayant la structure représentée par la formule (5) suivante et il comprend une unité structurelle de résine acrylique dérivée de la structure représentée par la formule (6) suivante : 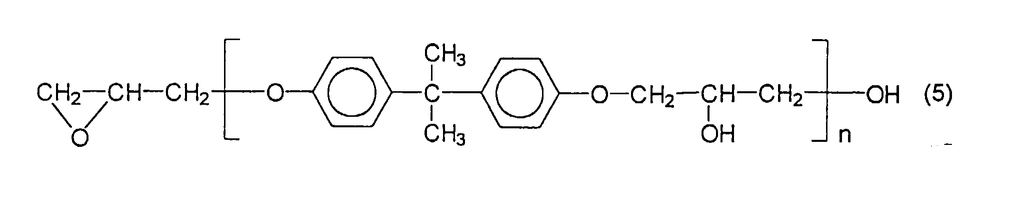 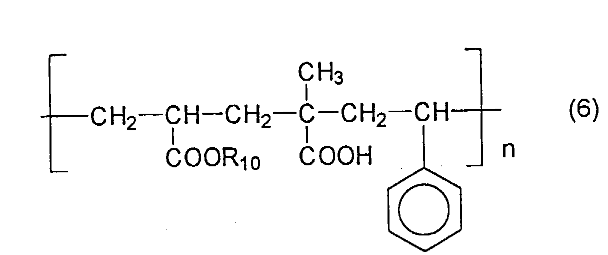 (dans laquelle R₁₀ est un groupe alkyle ayant 1 à 5 atomes de carbone et pouvant être substitué, tel que le groupe méthyle, éthyle, propyle, butyle, t-butyle et pentyle ou un groupe alcanol ayant 1 à 5 atomes de carbone et pouvant être substitué, tel que le groupe méthanol, éthanol, propanol, isopropanol, butanol, et pentanol).

5. Agent antirouille aqueux selon les revendications 1 - 4, comprenant en outre de la silice pouvant se disperser dans l'eau.

6. Agent antirouille aqueux selon la revendication 5, dans lequel la teneur en ladite silice pouvant se disperser dans l'eau est dans la plage 0,1 - 50 parties en poids pour 100 parties en poids de matières sèches de l'agent antirouille aqueux.

7. Agent antirouille aqueux selon l'une quelconque des revendication 1 - 4, comprenant en outre un pigment ou un agent de couplage du type silane.

8. Agent antirouille aqueux selon la revendication 7, dans lequel ledit pigment est d'au moins un type choisi parmi les pigments inorganiques, tels que l'oxyde de titane (TiO₂), l'oxyde de zinc (ZnO), l'oxyde de zirconium (ZrO), le carbonate de calcium (CaCO₃), le sulfate de baryum (BaSO₄), l'alumine (Al₂O₃), l'argile de kaolin, le noir de carbone et les oxydes de fer (Fe₂O₃, Fe₃O₄) ou des pigments organiques.

9. Agent antirouille aqueux selon la revendication 7, dans lequel ledit agent de couplage du type silane est d'au moins un type choisi parmi le γ-aminopropyltriméthoxysilane, le γ-aminopropyl-triéthoxysilane, le γ-glycidoxypropyl-triméthoxysilane, le γ-méthacryloxypropyl-triméthoxysilane et le N-[2-(vinylbenzylamino)éthyl]-3-aminopropyl-triméthoxysilane.

10. Agent antirouille aqueux selon l'une quelconque des revendications 1 - 4, comprenant en outre un solvant.

11. Agent antirouille aqueux selon la revendication 10, dans lequel ledit solvant est d'au moins un type choisi parmi les alcools, les cétones, les esters et les éthers.

12. Procédé de traitement antirouille, caractérisé en ce qu'un agent antirouille aqueux comme défini dans l'une quelconque des revendications 1 à 2 est appliqué en revêtement sur une surface métallique et ladite surface métallique est ensuite chauffée et séchée à une température de la plaque de 50 - 250 °C.

13. Procédé de traitement antirouille, caractérisé en ce qu'une surface métallique est chauffée de manière à ce que la température de la plaque atteigne 50 - 250 °C, un agent antirouille aqueux selon l'une quelconque des revendications 1 à 2 est appliqué en revêtement sur ladite surface métallique et ladite surface métallique est ensuite séchée.

14. Surface métallique ayant subi un traitement antirouille, caractérisée en ce que ladite surface est traitée par un agent antirouille aqueux selon l'une quelconque des revendications 1 à 2.
